# FASCICULE DE BREVET EUROPEEN

(11) **EP 3 867 728 B1**
(45) Date de publication et mention de la délivrance du brevet: **03.08.2022**
(21) Numéro de dépôt: 19806095.6
(22) Date de dépôt: 17.10.2019
(51) Int. Cl.: G05G 1/02, G05G 23/00, B64C 13/04, H01H 13/02, H01H 13/85

(54) **BOUTON DE COMMANDE UNIVERSEL POUR PANNEAU DE COMMANDE**
UNIVERSALSTEUERKNOPF FÜR BEDIENPULT
UNIVERSAL CONTROL BUTTON FOR CONTROL PANEL

(30) Priorité: 18.10.2018 FR 1801097
(43) Date de publication de la demande: 25.08.2021
(73) Titulaire: THALES, 92400 Courbevoie (FR)
(72) Inventeur: MOREL, Philippe, 95280 Jouy le Moutier (FR); CLERC, Thierry, 75015 Paris (FR); BUISSET, Bernard, 27860 Heudicourt (FR)
(74) Mandataire: Marks & Clerk France
(86) Numéro de dépôt international: PCT/EP2019/078226
(87) Numéro de publication internationale: WO 2020/079156

(56) Documents cités:
- WO-A1-2011/107958
- FR-A1- 2 192 398
- JP-U- S56 109 128

## Description

### Domaine technique

L'invention concerne le domaine des panneaux de commande, notamment de cockpit d'aéronef, et en particulier concerne un bouton de commande universel adapté à tout type de panneau quelque soit le cockpit.

### Etat de la technique

Dans le domaine de l'aéronautique, les panneaux de commande de cockpit d'aéronef comprennent un certain nombre de boutons de commande que les pilotes utilisent pour exécuter des fonctions d'avionique. Les boutons de commande sont généralement de type boutons-poussoirs pouvant être des interrupteurs ou des boutons rotatifs à potentiomètre. Le nombre de boutons peut varier selon les panneaux de commande et leur encombrement peut imposer des contraintes de positionnement sur le panneau aux fabricants de panneaux de commande.

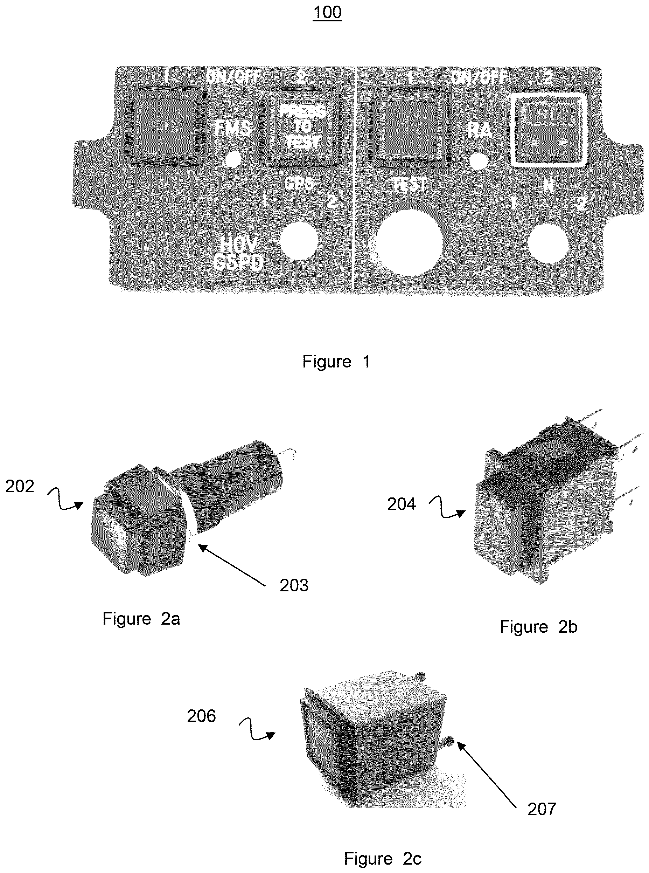

La figure 1 illustre schématiquement un exemple d'un panneau de commande d'un cockpit d'aéronef vu de face comprenant des boutons-poussoirs. Les figures 2a et 2b illustrent schématiquement des types de boutons-poussoirs connus pour panneaux de commande. Un premier type connu sur la figure 2a est un bouton-poussoir à vis (202), et un autre type connu sur la figure 2b est un bouton-poussoir avec patte ressort d'insertion (204).

Or, un panneau de commande ou une face avant d'un cockpit n'a pas une épaisseur constante et standard. Les différences d'épaisseur des panneaux peuvent aller de 1 mm à 7 mm et dépendent, entre autres :
- de la technologie utilisée pour les fabriquer ;
- du type de porteur (hélicoptère, char, avion militaire, avion civil, ...) ; ou encore
- d'avoir à intégrer ou non une fonction de rétroéclairage par exemple ;

- ... Dans le domaine de la simulation aéronautique, pour répondre à cette variété de panneaux et éviter d'avoir à fabriquer des boutons spécifiques à chaque type de panneau de commande, certaines solutions consistent à placer un écrou (203) à la tête des boutons à vis pour compenser les différentes épaisseurs des panneaux. D'autres approches consistent à placer des ressorts hélicoïdaux (207) à l'extrémité du corps des boutons-poussoirs (206), comme cela est illustré sur la figure 2c. Ces solutions amènent un surcoût de fabrication important. Ainsi, dans le cas de la fabrication de boutons qui puissent s'adapter à différentes représentations de panneaux de commande dans un simulateur d'aéronef, le surcoût engendré par l'ajout de ressorts hélicoïdaux peut représenter jusqu'à 40% du coût de fabrication du bouton.

Par ailleurs, les solutions à pattes ressort existantes nécessitent de prévoir un espace entre chaque bouton de manière à pouvoir accéder aux pattes et les pincer pour extraire le bouton (l'extraction du bouton n'est possible que par compression des pattes ressort). Cela interdit alors toute configuration matricielle de boutons telle qu'utilisée dans certains équipements de bord.

La demande de brevet EP 3 098 965 A1 propose un bouton de commande qui comporte un socle universel et des modules de commandes interchangeables qui viennent sélectivement se monter sur le socle universel. Le module de commande est choisi en fonction du type de fonction commandée et de la nature des ordres de la commande. Le socle est destiné à venir se fixer sur un panneau de commande du cockpit d'un aéronef. Cependant, il n'y a pas de prise en compte par le socle de l'épaisseur du panneau sur lequel il doit être fixé. Et le problème de la variabilité d'épaisseur des panneaux reste entier.

FR 2 192 398 A1 divulgue un bouton de commande selon le préambule de la revendication 1.

Aussi, il existe le besoin d'avoir des boutons de commande qui puisse s'adapter à tout type de panneau de commande quelque soit l'épaisseur du panneau tout en assurant une bonne tenue mécanique des boutons.

La présente invention propose de répondre à ce besoin.

### Résumé de l'invention

Un objet de la présente invention est de proposer un bouton de commande universel, de type bouton-poussoir ou interrupteur, qui est adaptable à tout panneau de commande.

L'invention trouvera une application avantageuse dans le domaine des simulateurs de vol, et en particulier pour les façades avant de panneaux de commande de différents cockpits d'aéronefs.

L'invention pourra plus généralement être appliquée dans tous les domaines de l'industrie à des équipements (professionnel, grand public, civil, militaire) ayant des tableaux ou panneaux comportant des boutons ou interrupteurs de commande comme par exemple pour l'automobile (tableau de bord de voiture), le ferroviaire (tableau de bord de train), l'informatique (boutons de clavier), grand public (tableau de commande de produits blancs), le domaine de la simulation d'entraînement et de jeux, etc ...

Avantageusement, le bouton de commande tel que revendiqué permet de créer des matrices de boutons jointifs car ne nécessitant pas d'espace entre chaque bouton.

A cet effet, l'invention a pour objet un bouton de commande comprenant :
- une tête de bouton ayant une extrémité supérieure servant de surface d'appui pour déclencher une action, et une extrémité inférieure ayant au moins un connecteur électrique ;
- un corps interne de bouton permettant d'y insérer la tête de bouton ;
- un corps externe de bouton comprenant une extrémité supérieure et une extrémité inférieure, l'extrémité supérieure étant ouverte pour y insérer le corps interne de bouton de manière à ce qu'il vienne en butée et que la surface d'appui de la tête de bouton dépasse, et de manière à ce que ledit au moins un connecteur électrique ressorte de l'extrémité inférieure du corps externe de bouton ;
le bouton de commande est caractérisé en ce que les flancs du corps externe de bouton entre l'extrémité supérieure et l'extrémité inférieure ne sont pas pleins et présentent des évidements de matière, la structure évidée du corps externe de bouton permettant une compression du corps externe dans l'axe du bouton.

Selon les modes de réalisation :
- le corps externe du bouton est de forme carrée ou rectangulaire, et les évidements donnent des faces qui ont chacune une structure de matière en forme de 'S'.
- le corps externe du bouton est de forme cylindrique et les évidements donnent une surface externe qui a une structure de matière en forme de ruban hélicoïdal.
- le corps externe du bouton est réalisé dans un matériau élastomère.
- le corps externe de bouton est de même forme que le corps interne de bouton.
- le corps externe du bouton est réalisé selon une technique d'impression 3D.
- la base inférieure du corps externe du bouton présente des logements pour accueillir les différents contacts du socle du corps interne du bouton quand celui-ci est inséré.
- le bouton de commande est un bouton-poussoir ou un interrupteur.
- la tête du bouton de commande est de forme carrée ou rectangulaire ou ronde ou ovale.

L'invention couvre aussi un panneau de commande, notamment pour cockpit d'aéronef, comprenant un ou une pluralité de boutons de commande tels que revendiqués.

L'invention s'applique aussi à un simulateur de vol comprenant un panneau de commande équipé de boutons de commande tels que revendiqués.

### Description des figures

Différents aspects et avantages de l'invention vont apparaitre en appui de la description d'un mode préféré d'implémentation de l'invention mais non limitatif, avec référence aux figures ci-dessous :
La figure 1 illustre schématiquement en vue de face, un exemple d'un panneau de commande d'un cockpit d'aéronef comprenant des boutons-poussoirs;
Les figures 2a à 2c illustrent schématiquement différents types de boutons-poussoirs pour panneaux de commande ;
La figure 3 illustre schématiquement un bouton de commande conforme à l'invention selon un mode de réalisation ;
Les figures 4a à 4c illustrent schématiquement une tête de bouton-poussoir pour un bouton de commande conforme à l'invention selon un mode de réalisation ;
La figure 5 illustre schématiquement un corps de bouton de commande conforme à l'invention selon un mode de réalisation ;
La figure 6 illustre la déformation du corps du bouton de commande selon l'invention pour compenser des variations d'épaisseur de panneaux de commande ;
La figure 7 illustre des mesures d'un bouton de commande selon l'invention pour une application concrète dans un simulateur d'aéronef ; et
La figure 8 illustre une matrice de boutons pour panneau de commande conforme aux principes de l'invention.

### Description détaillée de l'invention

D'une manière générale, pour répondre à la problématique évoquée, il est proposé un bouton de commande universel dont le corps externe du bouton est adaptable à l'épaisseur du panneau dans lequel le bouton est inséré.

Le terme générique « bouton » utilisé dans la présente description désigne indifféremment, un bouton à vis, un bouton-poussoir, un interrupteur, tout type de bouton ayant une tête de bouton et un corps de bouton.

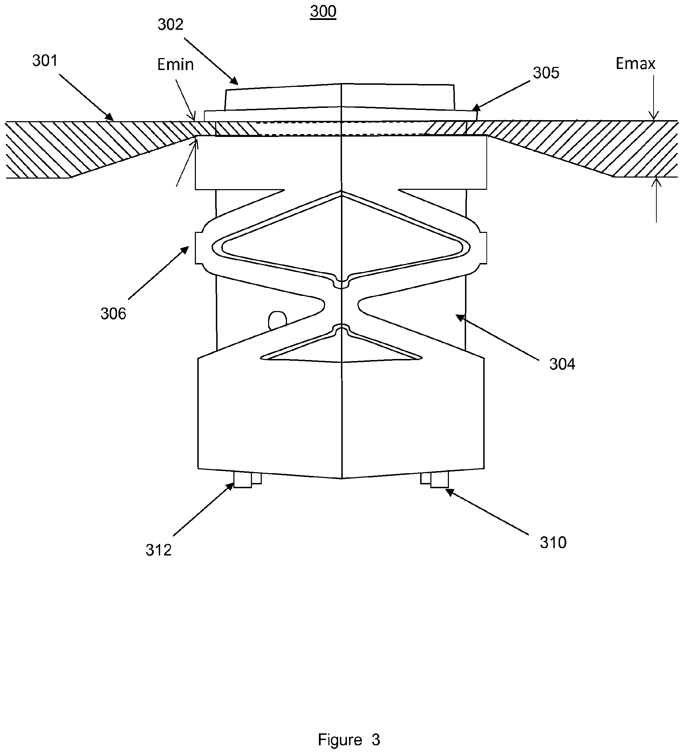

La figure 3 illustre schématiquement un bouton de commande (300) conforme à l'invention dans un mode de réalisation. Le bouton de commande complet comprend une tête de bouton (302) ou capot, un corps interne de bouton (304) et un corps externe de bouton (306). Le bouton de commande a pour but d'être inséré et maintenu dans un logement d'un panneau de commande (301).

La tête de bouton (302) correspond à une surface d'appui, visible sur la face externe d'un panneau de commande quand le bouton y est inséré. Le bouton proposé vise ainsi à être utilisé dans un panneau de commande par exemple de cockpit d'aéronef, comme moyen d'interaction via la surface d'appui entre l'homme et la machine. Selon le contexte d'utilisation, un panneau de commande a une épaisseur 'E' donnée, qui peut être différente d'un panneau à un autre, et varier dans une plage d'une épaisseur minimum 'Emin' à une épaisseur maximum 'Emax'.

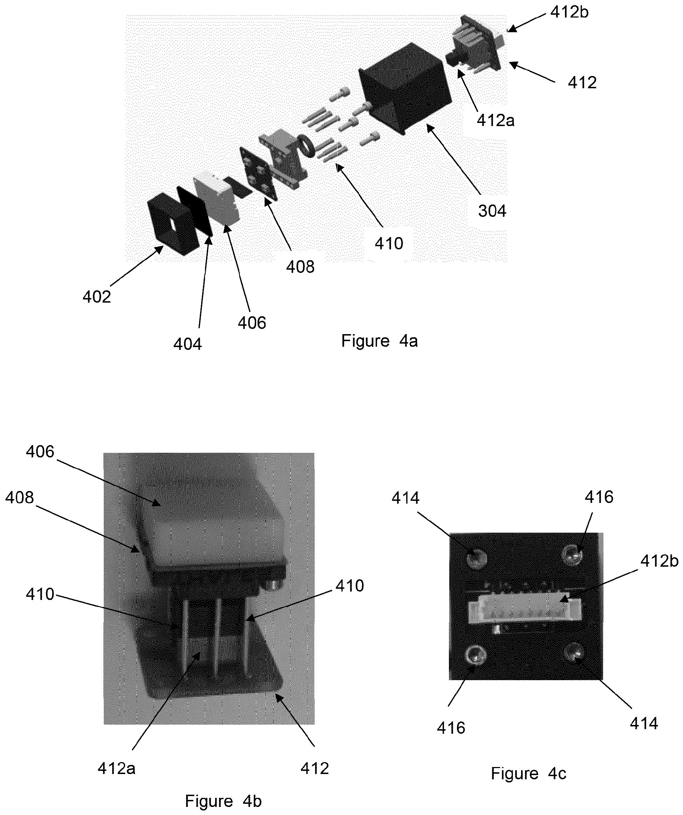

Les figures 4a à 4c détaillent schématiquement la structure d'une tête de bouton pour un bouton de commande conforme à l'invention.

La figure 4a montre l'ensemble des composants individuels d'une tête de bouton qui comprend, en partant du côté interface utilisateur :
- un cadre supérieur (402) ;
- une verrine (404) ;
- un diffuseur (406) sur lequel est posée la verrine, puis le cadre supérieur ;
- un circuit imprimé (408) comprenant des voyants de type LED CMS pour être visibles au travers du diffuseur qui de manière préférentielle est translucide ;
- des contacteurs à ressort (410) ou « spring contacts » selon l'anglicisme connu qui ont une double fonction : celle de véhiculer des signaux électriques depuis au moins un connecteur (412b) situé à l'extrémité inférieure de la tête de bouton jusqu'aux voyants LED (ce qui évite un câblage très minutieux et onéreux), et celle de restituer une force mécanique pour qu'un utilisateur retrouve une sensation de résistance lorsqu'il appuie sur la surface (406) ;
- un circuit imprimé ou socle (412) constituant l'extrémité inférieure de la tête de bouton et ayant du côté interne un poussoir ou un interrupteur (412a) et du côté externe un connecteur (412b), comme cela est visible sur les figures 4b et 4c.

Lors de l'assemblage du bouton, le sous-ensemble des composants (402 à 410) de la partie supérieure de la tête de bouton est inséré dans le corps interne (304), et les deux éléments (sous-ensemble supérieur, corps interne) sont fixés l'un à l'autre par le socle (412) qui comporte des vis (414) qui viennent se visser dans le corps interne du bouton de commande. Dans un mode de réalisation tel qu'illustré pour un bouton de commande carré, deux vis de fixation 'tête de bouton-corps interne' sont disposées dans des coins opposés du socle.

Le socle comprend aussi des trous cylindriques (416) pour permettre de visser l'ensemble 'tête du bouton-corps interne' au corps externe (306) du bouton.

Revenant à la figure 3, le corps interne du bouton dispose à son extrémité supérieure d'un épaulement (305) qui vient en appui de la face avant du panneau de commande (301) quand le bouton est inséré dans le panneau de commande.

Les boutons de commande selon l'invention peuvent être de formes simples, comme par exemple celui de la figure 3, ou être plus complexes ergonomiquement. Les boutons peuvent être équipés de petites excroissances rugueuses ou encore de surépaisseurs, permettant de reconnaitre un bouton particulier grâce à la sensibilité digitale.

Dans certaines réalisations, un bouton de commande peut comporter un voyant pour indiquer l'état du circuit, qui peut constituer tout ou partie du bouton, ou être déporté à proximité du bouton.

L'exemple de la figure 3 est simplifié avec un bouton de forme carrée afin de permettre une bonne compréhension des principes de l'invention, mais n'est pas limitatif en termes de taille, ni de forme, et selon des variantes de réalisation et les applications du panneau de commande à équiper, les boutons peuvent avoir des tailles et des formes différentes.

Par ailleurs, les boutons de commande de l'invention peuvent avoir des couleurs variées, répondre à un code de couleurs normalisé, par exemple les boutons importants en rouge pour l'arrêt ou en vert pour le lancement.

Dans d'autres variantes, les boutons dans leur face visible peuvent avoir des pictogrammes pour représenter le processus que va déclencher l'appui sur le bouton ou encore peuvent avoir des inscriptions. Ils peuvent aussi être rétro-éclairés afin de faciliter leur utilisation dans le noir ou la pénombre.

Selon des variantes de réalisation, la surface d'appui de la verrine peut être convexe ou concave, pour que le doigt appréhende mieux le bouton, sans le regarder. Les verrines peuvent être réalisées en polyméthacrylate de méthyle (PMMA) ou en Lexan. Elles peuvent être sérigraphiées pour que, par transparence, l'utilisateur puisse apercevoir avec la couleur désirée, le texte ou la figure qui sera illuminé par les LED du bouton.

La solution proposée n'est pas limitative et vise à couvrir toute variante de réalisation. Le principe nouveau et inventif de l'invention consiste à avoir un corps externe de bouton qui intègre une fonction ressort. Le corps externe du bouton est de manière préférentielle réalisé dans un matériau ayant des propriétés d'élasticité appropriées pour permettre une fonction ressort, comme les élastomères par exemple. Dans un mode de réalisation, le matériau utilisé est une résine polymère photoréactive tel qu'un mélange d'esters d'acide méthacrylique, de photo-initiateurs, de pigment exclusif et d'un liant additif.

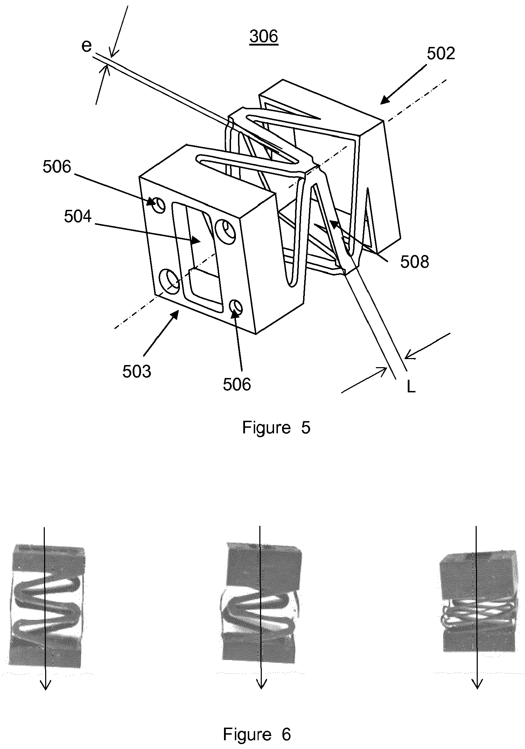

La figure 5 illustre schématiquement un corps externe (306) de bouton de commande conforme à l'invention, selon un mode de réalisation comme celui de la figure 3. Tel que visible sur la figure 5, le corps externe du bouton est ouvert à son extrémité supérieure (502) permettant de venir le glisser sur un assemblage 'corps interne de bouton-tête de bouton', ce dernier étant inséré dans un panneau de commande par l'avant du panneau. Le corps externe du bouton est fixé à l'assemblage 'corps interne de bouton-tête de bouton' par l'arrière du panneau de commande par un ensemble de vis, et selon l'épaisseur du panneau de commande, le corps externe est compresser par le vissage.

Le corps externe du bouton de commande comprend une base inférieure (503) présentant des trous cylindriques (506, 508) en correspondance avec les trous du socle de la tête de bouton (414, 416) permettant pour les uns de visser la tête de bouton au corps interne et pour les autres de visser le corps externe à l'assemblage 'corps interne de bouton-tête de bouton'. La base inférieure du corps externe comprend de plus une découpe (504) permettant de laisser passer le connecteur électrique (412b) de la tête de bouton.

Le flanc ou les différents flancs extérieurs (508) du corps externe de bouton de commande, situés entre l'extrémité supérieure (502) et l'extrémité inférieure (503) ne sont pas pleins et présentent des évidements de matière. Dans le cas d'un bouton de forme cylindrique, le principe de l'invention s'applique au flanc du cylindre qui n'est pas plein et constitue un ruban de matière hélicoïdal.

Avantageusement, (la) les flancs ou faces extérieures sont évidés selon une ergonomie fonctionnelle qui permet d'obtenir une capacité de déformation du corps externe dans l'axe du bouton. Selon l'exemple montré pour un corps de bouton carré ou rectangulaire, l'évidement réalisé donne des flancs du corps externe de bouton qui ont chacun une structure en forme de 'S', générant des spires qui peuvent être comprimées lors du vissage du corps externe du bouton pendant l'assemblage sur un panneau de commande. Ainsi, par sa structure indépendante de la forme du bouton et de l'épaisseur du panneau de commande, le corps externe réalise une fonction ressort qui permet de comprimer les spires en fonction de l'épaisseur du panneau dans lequel le bouton est inséré. Le corps externe du bouton présente une hauteur initiale qui par compression s'adapte pour que le bouton soit fixé et maintenu dans le panneau dans lequel il est logé.

La figure 6 illustre la déformation du corps externe du bouton par compression des spires, permettant de compenser les variations d'épaisseur des panneaux de commande. Avantageusement, la fonction ressort du corps externe du bouton qui est réalisée par conception, permet de fixer le bouton sur des panneaux dont l'épaisseur varie, en particulier sur des panneaux dont l'épaisseur peut varier entre 1mm et 7mm. La variation d'épaisseur est alors absorbée par la déformation du corps externe de bouton due au tassement des spires du ressort, comme cela est visible sur les trois états représentant trois épaisseurs de panneau de commande différentes.

Il est à noter qu'une compression excessive du corps externe du bouton qui viendrait accoler les spires du ressort les unes contre les autres n'est pas souhaitable car elle pourrait provoquer des déformations mécaniques irréversibles.

D'autres variantes ergonomiques d'évidements peuvent être réalisées pour le corps externe de bouton, qui peut par exemple être de forme cylindrique, ovale, hexagonale, ..... Les évidements choisis doivent garantir par conception la fonction ressort du corps externe. Le corps externe réalisé doit présenter au moins les caractéristiques suivantes:
- ne pas avoir de discontinuité de matière entre les extrémités hautes et basses du ressort, i.e. qu'il existe une bande de matière continue (sur chaque face ou flanc pour un corps externe de forme carrée ou rectangulaire) ;
- avoir prédéfini un nombre de spires pour constituer le ressort de largeur 'L' et d'épaisseur 'e' de manière à permettre une compression optimale du ressort.

Avantageusement, le corps externe du bouton peut être réalisé selon des techniques d'impression 3D avec une imprimante 3D de technologie SLA (stéréo-lithographie) par exemple, à partir d'un modèle CAO créé pour la forme de corps de bouton désirée.

Comparativement aux corps de boutons pleins réalisés par impression 3D, la réalisation 3D du corps externe de bouton évidé de l'invention permet une économie de matière et un temps d'impression plus court. Avantageusement, la production et l'intégration des boutons sont grandement simplifiées.

Par ailleurs, la structure fonctionnelle simple du corps externe de bouton de l'invention permet la suppression des entretoises, de la visserie habituelles mais aussi de la main d'œuvre associée, tous ces éléments impactant le coût final de fabrication.

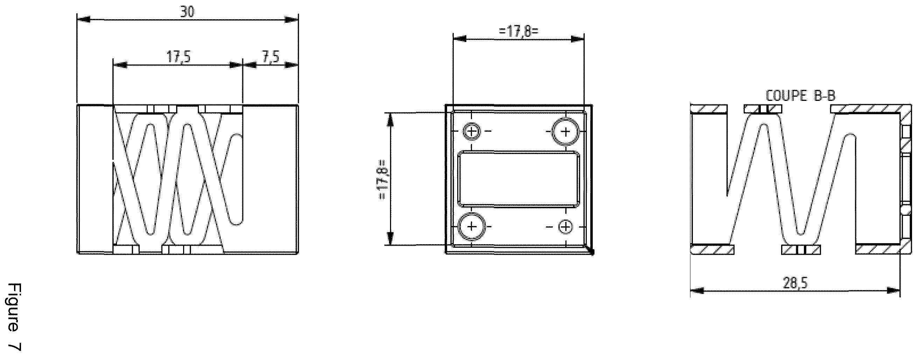

La figure 7 illustre des mesures d'un corps externe de bouton de commande selon l'invention pour une application concrète dans un simulateur d'aéronef. Le corps externe réalisé est pour un bouton carré qui fait 20 mm × 20 mm avec une largeur de spires du ressort de L=2 mm et une épaisseur des spires de e=1 mm.

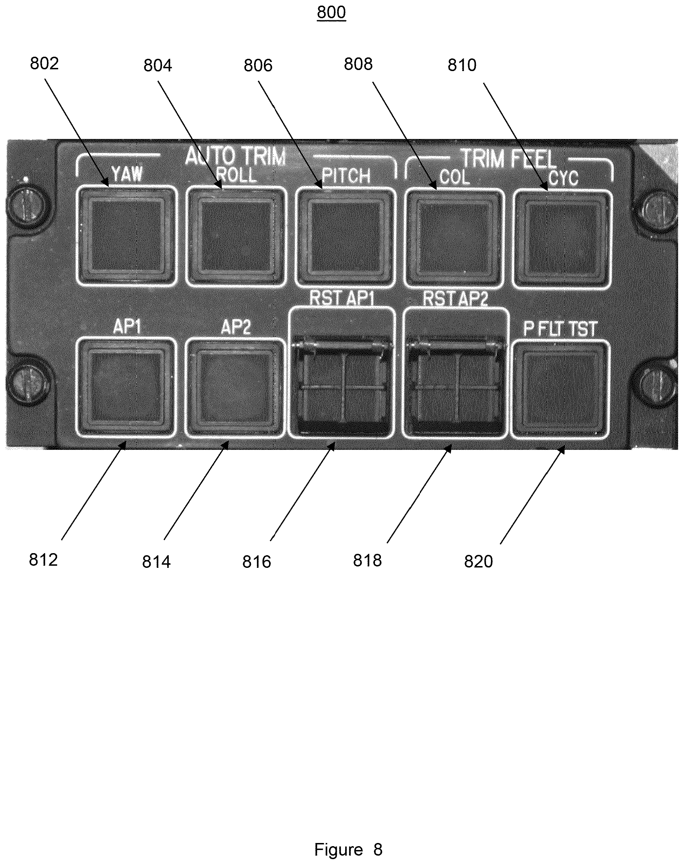

La figure 8 illustre une matrice de boutons (802 à 820) conformes aux principes de l'invention, équipant un panneau de commande (800). Avantageusement, la structure du bouton permet que sur un panneau les boutons sont jointifs, contrairement aux panneaux de l'art antérieur, par exemple montré en figure 1.

La présente description illustre un mode de réalisation de l'invention, mais n'est pas limitative. L'exemple a été choisi pour permettre une bonne compréhension des principes de l'invention, et une application concrète, mais n'est pas exhaustif mais la description doit permettre à l'homme du métier d'apporter des modifications et variantes d'implémentation en gardant les mêmes principes, tels que spécifiés dans le jeu de revendications attaché.

## Revendications

1. Bouton de commande (300) comprenant :
- une tête de bouton (302) ayant une extrémité supérieure servant de surface d'appui pour déclencher une action, et une extrémité inférieure ayant au moins un connecteur électrique ;
- un corps interne de bouton (304) permettant d'y insérer la tête de bouton ;
- un corps externe de bouton (306) comprenant une extrémité supérieure et une extrémité inférieure (503), l'extrémité supérieure (502) étant ouverte pour y insérer le corps interne de bouton de manière à ce qu'il vienne en butée et que la surface d'appui de la tête de bouton dépasse, et de manière à ce que ledit au moins un connecteur électrique ressorte de l'extrémité inférieure du corps externe de bouton, et où l'extrémité inférieure du corps externe du bouton présente des logements pour accueillir différents contacts du corps interne du bouton quand celui-ci est inséré;
le bouton de commande étant **caractérisé en ce que** les flancs (508) du corps externe de bouton entre l'extrémité supérieure et l'extrémité inférieure ne sont pas pleins et présentent des évidements de matière, la structure évidée du corps externe de bouton permettant une compression du corps externe dans l'axe du bouton.

2. Le bouton de commande selon la revendication 1 dans lequel le corps externe du bouton est de forme carrée ou rectangulaire, et les évidements donnent des flancs qui ont chacun une structure de matière en forme de 'S'.

3. Le bouton de commande selon la revendication 1 dans lequel le corps externe du bouton est de forme cylindrique et les évidements donnent des flancs qui ont une structure de matière en forme de ruban hélicoïdal.

4. Le bouton de commande selon l'une quelconque des revendications 1 à 3 dans lequel le corps externe du bouton est réalisé dans un matériau élastomère.

5. Le bouton de commande selon l'une quelconque des revendications 1 à 4 dans lequel le corps externe de bouton est de même forme que le corps interne de bouton.

6. Le bouton de commande selon l'une quelconque des revendications 1 à 5 dans lequel le corps externe du bouton est réalisé selon une technique d'impression 3D.

7. Le bouton de commande selon l'une quelconque des revendications 2 à 6 dans lequel le bouton de commande est un bouton-poussoir ou un interrupteur.

8. Le bouton de commande selon l'une quelconque des revendications 1 à 7 dans lequel la tête du bouton de commande est de forme carrée ou rectangulaire ou ronde ou ovale.

9. Panneau de commande, notamment pour cockpit d'aéronef, comprenant un ou une pluralité de boutons de commande selon l'une quelconque des revendications 1 à 8.

10. Simulateur de vol comprenant un panneau de commande équipé de boutons de commande selon l'une quelconque des revendications 1 à 8.

## Patentansprüche

1. Steuerknopf (300), Folgendes umfassend:
- einen Knopfkopf (302), welcher ein oberes Ende aufweist, welches als Druckfläche zum Auslösen einer Aktion dient, und ein unteres Ende, welches mindestens einen elektrischen Verbinder aufweist;
- einen inneren Knopfkörper (304), in welchen der Knopfkopf eingesetzt werden kann;
- einen äußeren Knopfkörper (306), welcher ein oberes Ende und ein unteres Ende (503) umfasst, wobei das obere Ende (502) geöffnet ist, um darin den inneren Knopfkörper einzusetzen, sodass dieser daran anschlägt und die Druckfläche des Knopfkopfs übersteht, und sodass der mindestens eine elektrische Verbinder aus dem unteren Ende des äußeren Knopfkörpers herausragt, und worin das untere Ende des äußeren Knopfkörpers Gehäuse zur Aufnahme diverser Kontakte des inneren Knopfkörpers aufweist, wenn dieser eingesetzt ist;
wobei der Steuerknopf **dadurch gekennzeichnet ist, dass** die Flanken (508) das äußeren Knopfkörpers zwischen dem oberen Ende und dem unteren Ende nicht massiv sind und Materialaussparungen aufweisen, wobei die mit Aussparungen versehene Struktur des äußeren Knopfkörpers eine Kompression des äußeren Körpers entlang der Achse des Knopfs ermöglicht.

2. Steuerknopf nach Anspruch 1, wobei der äußere Knopfkörper eine quadratische oder rechteckige Form aufweist, und die Aussparungen Flanken ergeben, welche jeweils eine S-förmige Materialstruktur aufweisen.

3. Steuerknopf nach Anspruch 1, wobei der äußere Knopfkörper eine zylindrische Form aufweist, und die Aussparungen Flanken ergeben, welche eine Materialstruktur in Form eines spiralförmigen Bandes aufweisen.

4. Steuerknopf nach irgendeinem der Ansprüche 1 bis 3, wobei der äußere Knopfkörper aus einem Elastomermaterial hergestellt ist.

5. Steuerknopf nach irgendeinem der Ansprüche 1 bis 4, wobei der äußere Knopfkörper die gleiche Form wie der innere Knopfkörper aufweist.

6. Steuerknopf nach irgendeinem der Ansprüche 1 bis 5, wobei der äußere Knopfkörper anhand einer 3D-Drucktechnik hergestellt ist.

7. Steuerknopf nach irgendeinem der Ansprüche 2 bis 6, wobei der Steuerknopf ein Druckknopf oder ein Schalter ist.

8. Steuerknopf nach irgendeinem der Ansprüche 1 bis 7, wobei der Kopf des Steuerknopfs eine quadratische oder rechteckige oder runde oder ovale Form aufweist.

9. Steuertafel, insbesondere für das Cockpit eines Luftfahrzeugs, umfassend einen oder eine Vielzahl von Steuerknöpfen nach irgendeinem der Ansprüche 1 bis 8.

10. Flugsimulator, umfassend eine mit Steuerknöpfen nach irgendeinem der Ansprüche 1 bis 8 ausgerüstete Steuertafel.

## Claims

1. A control button (300) comprising:
- a button head (302) having an upper end acting as a pressing surface for initiating an action, and a lower end having at least one electrical connector;
- an internal button body (304) into which the button head can be inserted;
- an external button body (306) comprising an upper end and a lower end (503), the upper end (502) being open for insertion of the internal button body therein such that it comes into abutment and the pressing surface of the button head protrudes, and such that said at least one electrical connector emerges from the lower end of the external button body, and where the lower base of the external body of the button has housings for accommodating different contacts of the internal body of the button when the latter is inserted;
the control button being **characterised in that** the flanks (508) of the external button body between the upper end and the lower end are not solid and have material openings, the hollow structure of the external button body allowing compression of the external body along the axis of the button.

2. The control button according to claim 1, wherein the external body of the button has a square or rectangular shape, and the openings produce flanks that each have an S-shaped material structure.

3. The control button according to claim 1, wherein the external body of the button has a cylindrical shape and the openings produce flanks that have a material structure in the form of a helical strip.

4. The control button according to any one of claims 1 to 3, wherein the external body of the button is made of an elastomer material.

5. The control button according to any one of claims 1 to 4, wherein the external button body has the same shape as the internal button body.

6. The control button according to any one of claims 1 to 5, wherein the external body of the button is produced by a 3D printing technique.

7. The control button according to any one of claims 2 to 6, wherein the control button is a pushbutton or a switch.

8. The control button according to any one of claims 1 to 7, wherein the head of the control button has a square or rectangular or round or oval shape.

9. A control panel, in particular for an aircraft cockpit, comprising one or a plurality of control buttons according to any one of claims 1 to 8.

10. A flight simulator comprising a control panel equipped with control buttons according to any one of claims 1 to 8.
